# EUROPÄISCHE PATENTANMELDUNG

(11) **EP 1 862 307 A2**
(43) Veröffentlichungstag der Anmeldung: **05.12.2007**
(21) Anmeldenummer: 07107537.8
(22) Anmeldetag: 04.05.2007
(51) Int. Cl.: B41F 31/04, B41F 33/00

(54) **Verfahren zur Berechnung von Korrekturwerten in einer Farbsteuerung oder Farbregelung für eine Druckmaschine**

(30) Priorität: 02.06.2006 DE 102006025898
(71) Anmelder: Heidelberger Druckmaschinen Aktiengesellschaft, 69115 Heidelberg (DE)
(72) Erfinder: Bestmann, Günter, 24161, Altenholz (DE)

(57) **Zusammenfassung**

Es wird ein Verfahren zur Berechnung von Korrekturwerten in einer Farbsteuerung oder Farbregelung für eine Druckmaschine, in welchem Referenzfarbwerte, wenigstens eine Farbraumtransformationsvorschrift und Messwerte zur Bestimmung der Istfarbwerte eines bedruckten Substrates verwendet werden und in welchem ein Vergleich des Istzustands mit dem Sollzustand in einem segmentierten geräteunabhängigen Farbraum, insbesondere dem CIELAB-Farbraum, durchgeführt wird.

## Beschreibung

Die Erfindung betrifft ein Verfahren zur Berechnung von Korrekturwerten in einer Farbsteuerung oder Farbregelung für eine Druckmaschine, in welchem Referenzfarbwerte, wenigstens eine Farbraumtransformationsvorschrift und Messwerte zur Bestimmung der Istfarbwerte eines bedruckten Substrates verwendet werden und in welchem ein Vergleich des Istzustands mit dem Sollzustand in einem segmentierten Farbraum durchgeführt wird.

Eine Farbsteuerung oder Farbregelung erzeugt Verstellempfehlungen für die Farbzufuhrelemente, insbesondere in einzelnen Farbzonen, der Farbwerke der Druckwerke einer Druckmaschine, insbesondere einer Offsetdruckmaschine. Dazu werden die im Druck resultierenden Farben auf einem bedruckten Substrat, beispielsweise einem Druckbogen, ausgemessen und mit Vorgabewerten oder Sollwerten, die insbesondere in digitaler Form vorliegen, verglichen. Die festgestellten Differenzen von Substrat und Vorgabe werden in gewichtete Änderungen der in die Druckmaschine einzubringenden Farbmengen umgerechnet.

Eine geläufige Farbregelung für Offsetdruckmaschinen ist Prinect® Image Control® der Heidelberger Druckmaschinen AG. Für die Praxis besonders bedeutsame Funktionalitäten dieser Farbregelung sind im "Bedienleitfaden zu Prinect Image Control", herausgegeben von der Heidelberger Druckmaschinen AG, Heidelberg, Deutschland, Januar 2006, beschrieben. Die Implementierung der Berechnung von Korrekturwerten in Prinect® Image Control® basiert auf einer Segmentierung des CMYK-Prozessfarbraumes, das heißt des geräteabhängigen Farbraumes der Druckmaschine.

Aufgabe der vorliegenden Erfindung ist es, ein alternatives Verfahren zur Berechnung von Korrekturwerten in einer Farbsteuerung oder Farbregelung einer Druckmaschine zu schaffen.

Diese Aufgabe wird erfindungsgemäß durch ein Verfahren zur Berechnung von Korrekturwerten in einer Farbsteuerung oder Farbregelung mit den Merkmalen gemäß Anspruch 1 gelöst. Vorteilhafte Weiterbildungen der Erfindung sind in den abhängigen Ansprüchen charakterisiert.

Erfindungsgemäß basiert das Verfahren auf farbmetrischen Prinzipien und einer Segmentierung eines geräteunabhängigen Farbraumes. Im erfindungsgemäßen Verfahren zur Berechnung von Korrekturwerten in einer Farbsteuerung oder Farbregelung für eine Druckmaschine, insbesondere eine Bogendruckmaschine, eine Mehrfarbenoffsetdruckmaschine oder eine Mehrfarbenoffsetbogendruckmaschine, werden Referenzfarbwerte, wenigstens eine Farbraumtransformationsvorschrift und Messwerte zur Bestimmung der Istfarbwerte eines bedruckten Substrates, insbesondere Papier oder Karton, verwendet. Es wird ein Vergleich des Istzustands, insbesondere der Istfarbwerte, mit dem Sollzustand, insbesondere mit den Sollfarbwerten, in einem segmentierten geräteunabhängigen Farbraum, insbesondere im segmentierten CIELAB-Farbraum, durchgeführt.

Die Farbwerke der Druckmaschine können jeweils eine Anzahl von in lateraler Richtung angeordneten Farbzonen aufweisen (zonale Farbwerke), für welche das erfindungsgemäße Verfahren jeweils angewendet wird.

Im erfindungsgemäßen Verfahren zur Berechnung von Korrekturwerten können pro Segment des segmentierten Farbraums ein mittlerer CIELAB-Farbwert und/oder ein mittlerer CIEXYZ-Farbwert und/oder ein mittlerer CMYK-Tonwert berechnet werden. Mittlere Werte pro Segment können insbesondere als geometrische Mittel oder als Segmentschwerpunkt berechnet werden.

Des Weiteren oder alternativ dazu kann für jedes Segment ein CMYK-Gewichtungsfaktor berechnet werden. Die CMYK-Gewichutngsfaktoren C_W, M_W, Y_W und K_W können aus den Tonwerten C, M, Y und K in linearer oder in quadratischer Gewichtung bestimmt werden.

In einer vorteilhaften Ausführungsform des erfindungsgemäßen Verfahrens werden digitale CMYK-Referenztonwerte eingelesen und in CIELAB-Referenzfarbwerte konvertiert. Es können auch Messwerte der CIELAB-Farbwerte des bedruckten Substrats eingelesen werden. Im erfindungsgemäßen Verfahren können für alle Werte CIELAB-Farbwertdifferenzen dL, da und db berechnet werden.

In einer vorteilhaften Weiterentwicklung des Verfahrens zur Berechnung von Korrekturwerten wird der Weißpunkt der Referenzfarbwerte korrigiert. Die Weißpunktkorrektur kann insbesondere durch eine lineare Skalierung gemäß der einfachen von-Kries-Transformation oder durch eine komplexe Farbumstimmung gemäß der Bradford-Transformation erfolgen.

Im erfindungsgemäßen Verfahren können des Weiteren oder alternativ dazu oder alternativ zueinander die folgenden Schritte durchgeführt werden: Pro Segment kann die Anzahl von Farbwerten berechnet werden. Pro Segment kann eine mittlere Abweichung der gemessenen Farbwerte von den Referenzfarbwerten berechnet wrden. Pro Segment kann eine notwendige Schichtdickenänderung berechnet werden, und es kann eine gewichtete Berechnung der durchzuführenden Schichtdickenänderung aus den pro Segment notwendigen Schichtdickenänderungen erfolgen.

In einer bevorzugten Ausführungsform des erfindungsgemäßen Verfahrens wird der CIELAB-Farbraum in Polarkoordinaten (CIELCH Darstellung) segmentiert, wobei die Helligkeitsachse L in N_L Helligkeitsbereiche und die ab-Ebenen jeweils in N_H Bunttonsektoren und N_C Buntheitsbereiche zerlegt wird. Dabei kann die Segmentierung mit Bunttonwinkel der Prozessfarben mittig im Bunttonsektor erfolgen. Des Weiteren oder alternativ dazu kann die Segmentierung der Helligkeitsachse nur im Bereich zwischen hellstem und dunkelstem Farbwert erfolgen. Des Weiteren oder alternativ dazu kann die Segmentierung der Buntheit in Abhängigkeit von der maximalen Buntheit im Sektor erfolgen.

Im erfindungsgemäßen Verfahren zur Berechnung von Korrekturwerten können absolute Farbwerte oder relative Farbwerte bezogen auf das Weiß des Substrates, insbesondere das Papierweiß oder Kartonweiß, im Verfahren verarbeitet werden.

Des Weiteren oder alternativ dazu kann zur Berechnung der Schichtdickenänderung die Auswahl der Segmente durch Gewichtung der Bunttonsegmente nahe den Prozessfarben erfolgen. In einer Weiterentwicklung des Verfahrens kann bei der Berechnung der Schichtdickenänderung eine Erweiterung der Segmente durch eine gewichtete Einbeziehung weiterer Bunttonsektoren erfolgen.

Mit Hilfe des erfindungsgemäßen Verfahrens kann insbesondere der Farbauftrag oder die Farbzufuhr von entweder genau drei Bunttonfarben und Schwarz oder mehr als drei Buntfarben und Schwarz oder eine Anzahl von Bunttonfarben ohne Schwarz gesteuert oder geregelt werden.

Weitere Vorteile und Weiterbildungen der Erfindung werden anhand der nachfolgenden detaillierten Beschreibung einer vorteilhaften Ausführungsform am Beispiel einer Bogenoffsetdruckmaschine Speedmaster® SM 102 der Heidelberger Druckmaschinen AG und des Farbmesssystems Prinect® Image Control® dargestellt.

Die konkrete Ausführungsform des erfindungsgemäßen Verfahrens basiert auf einer Segmentierung des gleichabständigen CIELAB-Farbraumes, der Zuordnung der Farbmesswerte und der Differenzen zu den Segmenten, der Berechnung von Korrekturwerten zu den Segmenten und einer gewichteten Mittelung über definierte Segmente. Ein ICC-Profil, das den Druckprozess und die zu druckenden Daten ausreichend genau beschreibt, ist dazu erforderlich.

Allgemein ist zunächst den Randbedingungen folgendes zu sagen:

Das Messsystem von Prinect® Image Control® hat eine geometrische xy-Auflösung von 2,03125 mm x 2,4375 mm. Die x-Richtung bezieht sich dabei auf die Bogenbreite, die y-Richtung auf die Bogenhöhe. Der Messkopf bewegt sich in x- Richtung. Die Anzahl der Messpunkte beträgt 520 x 310. Multipliziert mit der Auflösung ergibt dies eine Messfläche von 1056 mm x 756 mm (520 x 2,03125 mm bzw. 310 x 2,4375 mm). Die Breite der Farbzone einer Druckmaschine vom Typ Speedmaster® SM 102 beträgt 32,5 mm. Die Anzahl der Messpunkte in x-Richtung ergibt sich zu 16 Punkten (32,5 mm / 2,03125 mm).

Es gibt insgesamt 31 Farbzonen bei einer Druckmaschine der Baureihe SM 102. Die Anzahl der Messpunkte pro Farbzone beträgt 16 x 310 = 4960 Pixel. Zu jedem Messpunkt gibt es einen CIE 1976 L*a*b*-Farbmesswert (kurz CIELAB-Farbmesswert oder auch LAB-Wert) entsprechend ISO 13655 (Farbtemperatur D50, 2 Grad Normbeobachter, Messgeometrie 0/45, schwarze Unterlage, kein Polarisationsfilter). Dies sind die üblichen Messbedingungen im Druck und teilweise in der Vorstufe, wobei in der Vorstufe insbesondere beim Prüfdruck häufig auch mit weißer Unterlage gearbeitet wird. ICC-Profile beinhalten in der Regel Messwerte bezogen auf eine weiße Unterlage. Diese Unterschiede in den Messbedingungen werden durch eine Anpassung an das aktuelle Papierweiß des Druckprozesses in der hier beschriebenen Ausführungsform des erfindungsgemäßen Verfahrens kompensiert.

Zur Vereinfachung der Darstellung dieser Ausführungsform wird von einem Druckprozess mit CMYK-Prozessfarben ausgegangen. Auf eine Verallgemeinerung auf beliebige Farben, insbesondere auf mehr als 4 Farben sowie auf die Regelung von Sonderfarben wird später eingegangen.

In der Vorstufe werden zusätzlich zur hoch aufgelösten Belichtung der Druckplatten niedrig aufgelöste Vorschaubilder (Previews) der Farbauszüge berechnet. Vorschaubilder mit eingerechneter Plattenlinearisierung und Prozesskalibrierung werden zur Berechnung der Flächendeckung auf der Druckplatte für die Voreinstellung der Druckmaschine verwendet. Unkorrigierte Vorschaubilder der originalen Bilddaten der einzelnen Farbauszüge werden für die Berechnung des digitalen Sollbildes am Prinect® Image Control® verwendet. Die Vorschaubilder haben in der Regel eine Auflösung von 50,8 dpi x 50,8 dpi (0,5 mm x 0,5 mm pro Pixel).

Die Auflösung des Messsystems, die Lage der Messfelder (Messpunkte) auf dem Bogen und die Pixel der Vorschaubilder müssen miteinander zur Deckung gebracht werden. Das Vorschaubild muss dabei auf die Auflösung der Messfelder heruntergerechnet werden. Weiter müssen die Auszüge zu einem gemeinsamen CMYK-Bild zusammengefasst werden (Composite-Datei). Farbseparationen in der Vorstufe erfolgen heute allgemein über ICC-Profile. Die Profile charakterisieren den zu verwendenden Druckprozess auf einem definierten Bedruckstoff. Idealerweise sind der zu verwendende Druckprozess und der reale Druckprozess im Rahmen geringer Toleranzen gleich. Sind die Unterschiede größer, müssen entsprechende Maßnahmen ergriffen werden, auf die später eingegangen wird. Die Auflösung der Messung (Messfenster 2,03125 mm x 2,4375 mm) ist relativ gering in Relation zu den originalen Bildinformationen (0,0833 mm x 0,0833 mm bei 120 Linien/cm entsprechend 60er Raster). Es werden etwa 700 Bildinformationen gemittelt. Daraus folgt, dass für eine Regelung nur einigermaßen homogene Bereiche verwendet werden können. Das niedrig aufgelöste Vorschaubild umfasst etwa 36 gemittelte Bildinformationen und kann gegebenenfalls für eine Entscheidung, welche Pixel für eine Auswertung zu verwenden sind, herangezogen werden. Auf die konkreten Probleme im Zusammenhang mit der Auflösung, der Lage relativ zu den Farbzonengrenzen ist in dieser Beschreibung der Ausführungsform nicht einzugehen.

Im Weiteren wird zur Vereinfachung der Darstellung der Ausführungsform des erfindungsgemäßen Verfahrens davon ausgegangen, das die Messwerte einer Farbzone geometrisch korrekt mit den Referenzwerten korreliert sind. Ohne Beschränkung auf eine konkrete Anzahl von Farbzonen wird die Ausführungsform anhand einer Farbzone beschrieben, wobei unter Umständen notwendige Gewichtungen von Werten an den Rändern der Farbzone hier nicht berücksichtigt werden. Auch werden offensichtliche Diskrepanzen, die sich durch hohe Farbwertdifferenzen bemerkbar machen können, nicht berücksichtigt. Im Detail ist der Verfahrensablauf in dieser Ausführungsform wie folgt.

Für den aktuellen Druckprozess, der durch ein ICC-Profil beschrieben ist, wird eine Segmentierung des CIELAB-Farbraumes durchgeführt. Die digitalen Referenzwerte aus der Druckvorstufe, die die Verteilung der Prozessfarbwerte auf dem Druckbogen beschreiben, werden mit den Farbmesswerten des Druckbogens verglichen und es werden für die einzelnen Segmente die Differenzen zwischen Sollbild und Istbild ermittelt. Aus den Abweichungen werden relative Schichtdickenänderungen berechnet und durch gewichtete Mittelung in Korrektursignale für die Farbzonen umgerechnet.

Die Segmentierung des CIELAB-Farbraums umfasst auch eine Berechnung eines mittleren CIELAB-Farbwertes für jedes Segment, eine Berechnung eines mittleren CIEXYZ-Farbwertes für jedes Segment, eine Berechnung eines mittleren CMYK-Tonwertes für jedes Segment und eine Berechnung von CMYK-Gewichtungsfaktoren für jedes Segment.

Zur Berechnung der Farbdifferenzen in einer Farbzone werden digitale CMYK-Referenztonwerte für die Farbzone eingelesen, die digitalen CMYK-Referenztonwerte in CIELAB-Referenzfarbwerte konvertiert, die CIELAB-Farbmesswerte für die Farbzone eingelesen, der Weißpunkt der digitalen Referenzfarbwerte korrigiert und die CIELAB-Farbwertdifferenzen (dL, da, db) für alle Werte berechnet.

Zur Berechnung der Schichtdickenänderung werden die Anzahl von Farbwerten pro Segment (ein Histogramm) berechnet, die mittlere Abweichung der Farbmesswerte pro Segment berechnet, die Schichtdickenänderung pro Segment berechnet und eine Gewichtete Berechnung der Schichtdickenänderung für eine Farbzone durchgeführt.

Die Segmentierung des CIELAB-Farbraums wird einmal zu Beginn eines Auftrages bzw. bei einer Änderung des ICC-Profils durchgeführt. Sie gilt für alle aufeinander folgenden Regelschritte. Bei einer Mehrzahl von Farbzonen gilt sie auch für alle Farbzonen. Der CIELAB-Farbraum ist ein empfindungsgemäß annähernd gleichabständiger dreidimensionaler Farbraum, der durch rechtwinklige Koordinaten L*, a* und b* definiert ist. In einer anderen Darstellung des CIELAB-Farbraums werden statt der kartesischen Koordinaten a* und b* der Buntheit genannte Abstand C* von der Helligkeitsachse L* und der Bunttonwinkel h bezogen auf die positive a*-Koordinate verwendet (CIELCH-Farbraum). Die Helligkeitsachse umfasst den Wertebereich von L* = 0 (Schwarz) bis L* = 100 (Weiß). Die Rot/Grün-Koordinate a* ist ebenso wie die Gelb/Blau-Koordinate b* in ihrem Wertumfang nicht eingeschränkt, natürliche Farben wie z.B. Druckfarben umfassen Wertebereiche von +100 für Rot und Gelb und -60 für Grün und Blau. Unbunte oder graue Farbtöne haben Werte a* = b* = 0. Die Buntheit C* und der Buntton h ergeben sich aus den Koordinaten a* und b* durch eine Umwandlung in Polarkoordinaten.

Für diese Ausführungsform des erfindungsgemäßen Verfahrens wird der CIELCH-Farbraum in Segmente zerlegt, die jeweils einen bestimmten Helligkeits-, Buntheits- und Bunttonwinkelbereich umfassen. Die Helligkeitsachse L* wird in N_{L} Helligkeitsbereiche und die a*, b*- Ebene wird in N_{H} Bunttonsektoren und N_{C} Buntheitsbereiche zerlegt. Jedes dieser Segmente beschreibt einen Bereich von Farbwerten. Bei N_{L} = 10 erhält man Helligkeitsbereiche 0...10, 10...20, ..., 90...100, bei N_{C} = 10 und einer maximalen Buntheit von C* = 100 erhält man Buntheitsbereiche 0...10, 10...20, ... 90...100 (alle bunteren Farben kommen in das letzte Segment) und bei N_{H} = 12 erhält man Bunttonwinkelbereiche von im Mittel 30 Grad beginnend bei der positiven a*- Achse (Zählrichtung mathematisch positiv, also gegen den Uhrzeigersinn). Insgesamt erhalten wir N_{L} x N_{C} x N_{H} = 10 x 10 x 12 = 1200 mögliche Segmente. Übliche Druckprozesse werden nur einen Teil dieser Segmente (in der Regel weniger als die Hälfte) überdecken. Es werden daher später auch nur die Segmente ausgewertet, in denen Farbwerte vorhanden sind.

Die Bunttonwinkel werden so bestimmt, dass die reinen Buntfarben C, M, Y jeweils einem Winkel zugeordnet werden können. Der Bereich zwischen den Buntfarben wird in 4 Teile zerlegt. Für den Bereich zwischen Magenta und Yellow gelten z.B. die folgenden Eckwerte: 100MOY, 100M50Y, 100M100Y, 50M100Y und 0M100Y (100M50Y bedeutet in dieser Schreibweise 100% Magenta, 50% Yellow). Mit Hilfe des ICC-Profils des Druckprozesses können diese Werte in CIELAB-Farbwerte transformiert werden und dann in Bunttonwinkel umgerechnet werden. Für einen typischen Offsetprozess ergeben sich für obigen Bereich die folgenden Winkel (gerundet): 100M0Y = 357 Grad bzw. - 3 Grad, 100M50Y = 16 Grad, 100M100Y = 33 Grad, 50M100Y = 66 Grad und 0M100Y = 93 Grad.

Der Bereich von Gelb bis Cyan und von Cyan bis Magenta wird analog zerlegt. Der Bereich 100M0Y bis 100M50Y bekommt den Indexwert 0, der daran anschließende Bereich 100M50Y bis 100M100Y den Index 1 usw. Ein Segment mit den Indexwerten n_{L} = 4, n_{C} = 2, n_{H} = 2 überdeckt den Wertebereich L* = 40 ... 50, C* = 20 ... 30, h = 33 ... 66. (Die Indexwerte n_{L} laufen dabei von 0 bis N_{L}-1, n_{C} und n_{H} entsprechend.) Um zu entscheiden, in welches Segment ein aktueller CIELAB-Farbwert einzuordnen ist, muss dieser in eine CIELCH-Darstellung umgewandelt werden. Die Indexwerte findet man dann einfach durch Vergleiche. Beispiel: CIELAB = 43/4/52 ergibt CIELCH = 43/52/86 und die Indexwerte n_{L} = 4, n_{C} = 5 und n_{H} = 3.

Es sei angemerkt, dass für den angesprochenen Fachmann nach dieser Darstellung klar ist, dass auch andere Segmentierungen möglich sind und gegebenenfalls zweckmäßig sein können. So können z.B. die Prozessfarben nicht am Rand sondern in der Mitte eines Sektors liegen. Oder die Anzahl der Sektoren kann feiner oder gröber gewählt werden. Das Prinzip der Auswertung, welche in dieser Ausführungsform verwendet wird, verändert sich dabei aber nicht.

Für die weitere Auswertung werden die mittleren Farbwerte und Gewichtungsfaktoren der Segmente benötigt. In dieser Ausführungsform wird der geometrische Mittelpunkt des Segmentes verwendet, es lassen sich aber auch - wie bereits weiter oben erwähnt - andere Mittelpunkte, wie beispielsweise der Schwerpunkt des Segmentes, verwenden.

Um einen mittleren CIELAB-Farbwertes für jedes Segment zu berechnen, wird für alle Segmente jeweils der geometrische Mittelpunkt bestimmt. Dazu wird der Mittelwert der CIELCH-Werte der Segmentgrenzen jeweils getrennt berechnet. Dabei ist beim Bunttonwinkel h zu berücksichtigen, dass Werte nahe 0 oder 360 Grad zu Unstetigkeiten führen können. Hier sind entsprechende Fallunterscheidungen zu treffen. Beispiel: Für ein Segment mit den Indexwerten n_{L} = 4, n_{C} = 5 und n_{H} = 3 ergeben sich L* = 40 und 50, C* = 50 und 60 und h = 66 und 93. Daraus ergibt sich ein mittlerer CIELCH-Wert für dieses Segment von L* = 45, C* = 55 und h = 79,5. Koordinatentransformation ergibt dann einen mittleren CIELAB-Farbwert von L* = 45, a* = 10 und b* = 54. 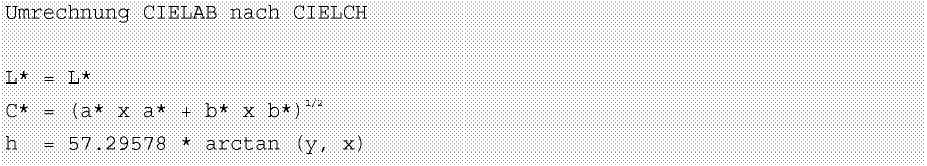 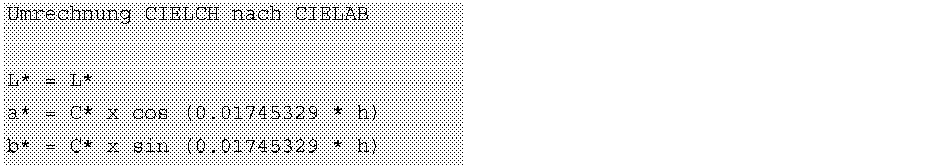 Es folgt dann eine Berechnung eines mittleren CIEXYZ-Farbwertes für jedes Segment. Der CIEXYZ-Farbraum basiert auf den Empfindlichkeitskurven der drei Farbrezeptoren des menschlichen Auges und stellt die Grundlage für die messtechnische Erfassung von Farbwerten dar. Er ist darüber hinaus die Basis des CIELAB-Farbraumes. Es gibt eindeutige Beziehungen für Umrechnung zwischen CIEXYZ und CIELAB: 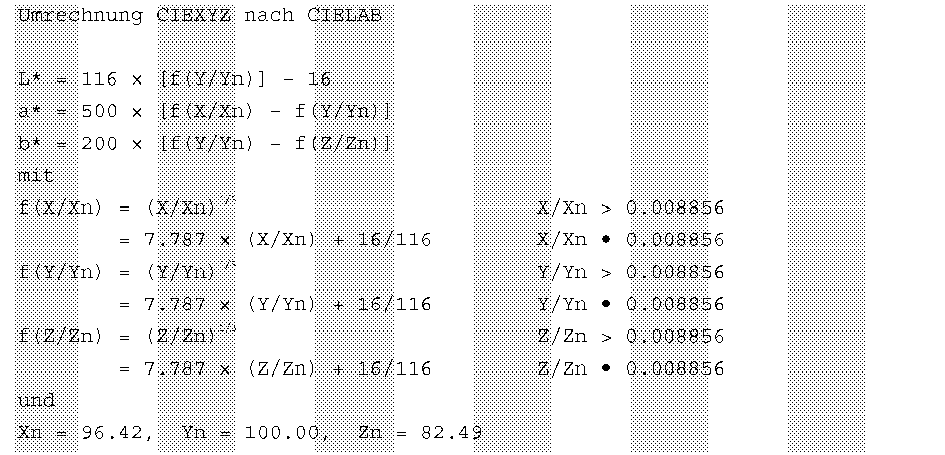 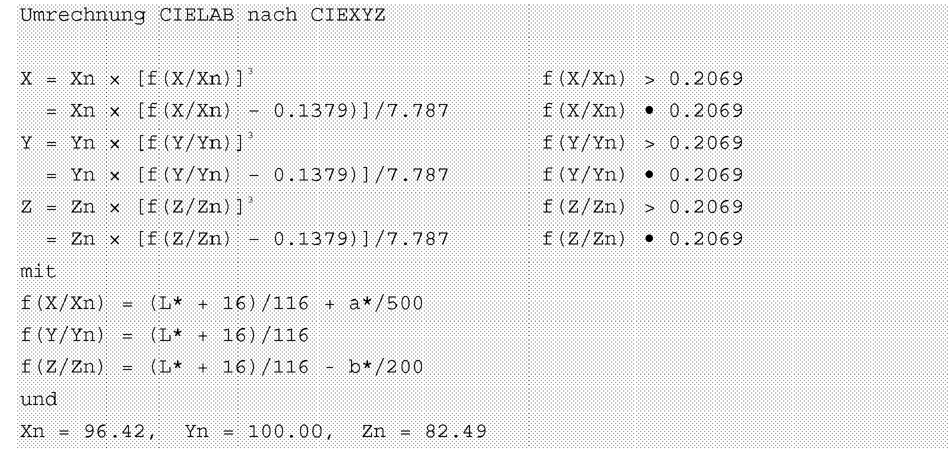 Der mittlere CIELAB-Farbwert für jedes Segment wird in einen CIEXYZ-Farbwert umgerechnet. Für das oben angegebene Beispiel ergibt sich für einen mittleren CIELAB-Farbwert von L* = 45, a* = 10 und b* = 54 ein CIEXYZ-Farbwert von X = 15.69, Y = 14.54 und Z = 1.38.

Für die spätere Gewichtung der Korrekturwerte werden die mittleren CMYK-Tonwerte benötigt. Dazu wird der mittlere CIELAB-Farbwert jeden Segmentes mit dem aktuellen ICC-Profil des Druckprozesses bzw. der Farbseparation in einen CMYK-Tonwert für jedes Segment umgerechnet. Der Rendering Intent des ICC-Profils ist dabei "absolut farbmetrisch".

An dieser Stelle sei angemerkt, dass ICC-Profile standardisierte Dateien zur Beschreibungen der farblichen Eigenschaften sowohl von Geräten als auch von Bildern und Grafiken unter Verwendung von farbmetrischen Standards sind. Geräte können insbesondere Bildabtaster (Scanner), Digitale Kameras, Monitore und alle Arten von Druckern und Druckprozessen sein. Bilder und Grafiken sind Dateien, die in den verschiedensten medienneutralen oder geräteabhängigen Farbformaten vorliegen können. Die ICC-Profile versorgen Farbmanagementsysteme mit den notwendigen Informationen, um die Farbdaten zwischen den verschiedensten Farbräumen zu transformieren. Für den mittleren CIELAB-Farbwert des obigen Beispiels erhalten wir mit einem Standardprofil für einen Druckprozess (ISOcoated.icc) folgende Tonwerte: C = 33 %, M = 46 % , Y = 100 % und K = 24 % .

Bekanntlich hängt die Kombination der Tonwerte für einen gegebenen Farbwert vom Prozess selbst ab (Papier, Druckfarben, Volltonfärbung, Tonwertzunahme) und vom Farbaufbau bei der Berechnung der Separationstabellen (Schwarzaufbau, maximale Flächendeckung, maximaler Schwarzanteil). Es ist daher wichtig, dass das verwendete ICC-Profil zu den zu druckenden Daten bekannt ist. Das ist in heutigen modernen Systemumgebungen der Fall.

Zur Berechnung der relativen Schichtdickenänderung der einzelnen Prozessfarben für eine Farbzone werden die Schichtdickenänderung ausgewählter Segmente gewichtet aufsummiert und gemittelt. Die CMYK-Gewichtungsfaktoren für jedes Segment sollen dabei die dominante Prozessfarbe stärker berücksichtigen. Eine der möglichen Funktionen, die für Bildbereiche mit vielen verschiedenen Farbwerten gut geeignet ist, ist im Folgenden dargestellt: 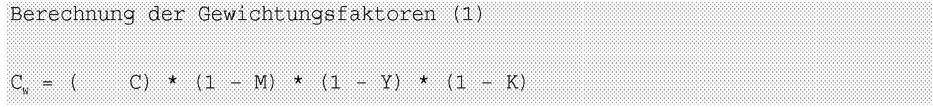 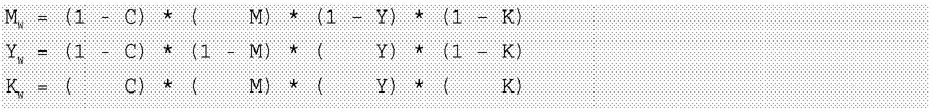 Ein Ergebnis der Funktionen ist, dass hohe Anteile der abdunkelnden, verschwärzlichenden Farben zu einem kleinen Gewichtungsfaktor führen. Mit den Tonwerten aus dem oben angegebenen Beispiel C = 33 %, M = 46 %, Y = 100 % und K = 24 % ergeben sich die Gewichtungsfaktoren für dieses Segment zu C_{W} = 0.00, M_{W} = 0.00, Y_{W} = 0.275 und K_{W} = 0.036. Der wesentliche Beitrag zur Farbregelung stammt von der Prozessfarbe Yellow.
Für Bildbereiche nur mit Volltonflächen mit K = 100 % oder C = M = 100% ist die obige Gewichtungsfunktion nicht gut geeignet. Hier müssen andere Funktionen oder eine Regelung über Kontrollstreifen verwendet werden. In Volltonflächen mit 100 % Black (K) kann z.B. folgende Funktion verwendet werden:

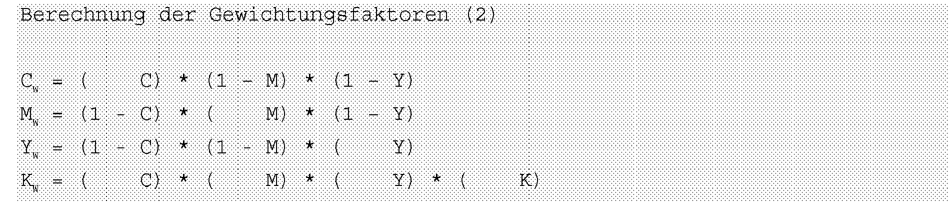

Während der Initialisierungsphase werden die digitalen Referenzwerte und die Farbmesswerte eingelesen, der Weißpunkt an das aktuelle Papierweiß angepasst und die Fehler der einzelnen Wertepaare berechnet. Da die digitalen Referenzwerte sich während eines Auftrages nicht verändern, müssen sie nur einmal zu Beginn eines Auftrages eingelesen und konvertiert werden. Dies gilt auch für die Zuordnung zu den Segmenten.

Die digitalen CMYK-Referenztonwerte aus den Vorschaubildern werden für eine Farbzone eingelesen und in einer definierten Reihenfolge gespeichert. Wenn bei der Farbzonenregelung geometrische Abhängigkeiten (z.B. Randlagen) berücksichtigt werden sollen, bietet sich die Speicherung als zweidimensionales Array an. Im Falle des Prinect ® Image Control® und der Speedmaster® SM 102 mit 31 Farbzonen in dieser Ausführungsform hätte dieses Array eine Größe von 16 x 310 Feldern.

Für einen farbmetrischen Vergleich auf Basis von CIELAB-Farbwerten müssen die digitalen CMYK-Referenztonwerte in CIELAB-Farbwerte umgerechnet werden. Hierzu benötigt man das in der Vorstufe für die Separation verwendete ICC-Profil. Da absolute Farbwerte entsprechend ISO 13655 benötigt werden, muss mit dem Rendering Intent "absolut farbmetrisch" transformiert werden. Die Farbkonvertierungen können mit den üblichen Methoden des Color Managements unter Verwendung eines Color Management Moduls (Software zur Farbtransformation), wie es dem Fachmann bekannt ist, durchgeführt werden. Die absoluten Farbwerte nach ISO 13655 beziehen sich auf ein definiertes Referenzweiß (Weißkachel). Gemäß dieser Darstellung ist es aber dem Fachmann auch möglich, mit relativer Colorimetrie alle Auswertungen durchzuführen. Dabei beziehen sich alle Farbwerte auf das aktuelle Papierweiß.

Die CIELAB-Farbmesswerte aus dem Messdatensatz werden für eine Farbzone eingelesen und in der gleichen Reihenfolge wie die digitalen Referenzwerte gespeichert. Dadurch lassen sich in einfacher Weise Referenzwerte und Farbmesswerte miteinander vergleichen. Die Farbmesswerte werden entsprechend ISO 13655 gemessen (Farbtemperatur D50, 2 Grad Normbeobachter, Messgeometrie 0/45, schwarze Unterlage, kein Polarisationsfilter).

Der Weißpunkt oder das Papierweiß des aktuell verwendeten Bedruckstoffes und das Papierweiß des ICC-Profils sind in aller Regel leicht unterschiedlich. Für die weitere Auswertung ist daher eine Korrektur des Weißpunktes der Referenzdaten (der digitalen Referenzwerte) erforderlich. Dazu werden in den digitalen CMYK-Referenztonwerten die Koordinaten von ein oder mehreren Werten mit C = M = Y = K = 0% gesucht. Die zu diesen Koordinaten gehörenden CIELAB-Farbwerte der Referenzdaten und der Messdaten sind dann die entsprechenden Papierweißwerte. Wenn es innerhalb einer Farbzone keine Papierweißwerte gibt, wird ersatzweise das Referenzweiß des Profils oder ein anderer definierter Wert wie der der Lichtart D50 verwendet.
Bei mehreren Werten kann gewichtet gemittelt werden, um Artefakte aufgrund von Verschmutzungen und Messungenauigkeiten auszugleichen. Eine einfache und ausreichende Methode der Weißpunktkorrektur bei kleinen Unterschieden der Weißpunkte ist die "einfache von-Kries-Transformation". Hier werden die XYZ-Farbwerte einer linearen Transformation unterworfen:

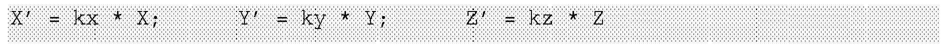

Die Konstanten kx, ky, kz ergeben sich aus den CIEXYZ-Farbwerten der Weißpunkte von Profil und Messwerten: 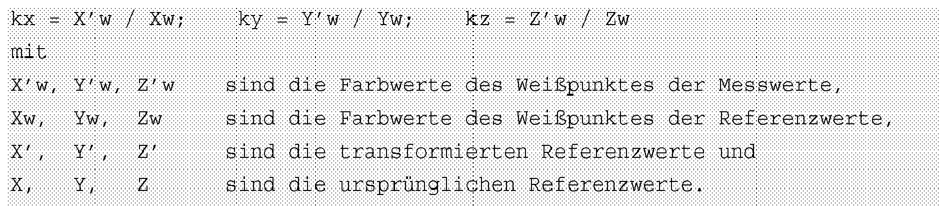 Die Weißpunktkorrektur der CIELAB-Referenzfarbwerte aller Werte der Farbzone erfolgt durch Umrechnung der CIELAB-Farbwerte in CIEXYZ-Farbwerte, der Multiplizierung der CIEXYZ-Farbwerte mit den Korrekturfaktoren und der Rückrechnung der korrigierten Werte in CIELAB-Farbwerte.

Für den Fachmann ist klar, dass auch eine andere Methode der Weißpunktkorrektur durchgeführt werden kann. Beispielsweise kann eine Bradford-Transformation vorteilhaft sein. Hier findet eine (komplexere) Farbumstimmungstransformation des Papierweißes statt. Für die meisten Fälle ist aber bereits die in dieser Ausführungsform verwendete lineare Methode ausreichend genau.

In einer Abwandlung kann die Korrektur auch relativ einfach durch das Color Management Modul durchgeführt werden. Hierzu wird in dem ICC-Profil des Druckprozesses vor der Transformation der digitalen CMYK-Referenztonwerte in CIELAB-Farbreferenzwerte der Weißpunkt durch das aktuelle Weiß des Bedruckstoffes ersetzt.

Der Weißpunkt des aktuellen Bedruckstoffes muss nur einmal für alle Farbzonen bestimmt werden. Dies kann zu Beginn eines Auftrages ausgeführt werden und in dem ICC-Profil hinterlegt werden. Die Korrektur des Weißpunktes brauchen dann nicht jedes Mal komplett durchgeführt werden.

Unterschiedliche Messbedingungen (beispielsweise schwarze Unterlage bei Messwerten, weiße Unterlage bei ICC-Profilen und somit Referenzwerten) und unterschiedliche Absolutgenauigkeiten der Messinstrumente werden durch die Korrektur weitestgehend mit ausgeglichen.

Werden in einer Abwandlung die Auswertungen mit relativer Colorimetrie durchgeführt, dann müssen die Messwerte entsprechend umgerechnet werden. Hier muss dann das vom ICC in der Profilformatspezifikation beschriebene Verfahren (einfache von-Kries-Transformation) verwendet werden.

Aus den gemessenen Farbwerten und den korrigierten Referenzfarbwerten lassen sich die Abweichungen für alle Werte, die CIELAB-Farbwertdifferenz (dL, da, db) einer Farbzone berechnen. 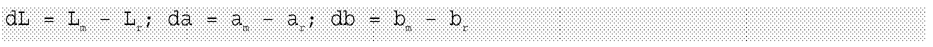 Der Index m steht für Messwert, der Index r steht für Referenzwert. Aus den Farbwertdifferenzen lässt sich die Abweichung der Farbwerte in Delta E berechnen. Ein Delta E von 1 ist dabei im Mittel ein vom Auge gerade wahrnehmbarer Farbunterschied. Es bietet sich daher an, nur solche Farbwerte bei der weiteren Auswertung zu berücksichtigen, die eine definierte Delta E- Schwelle, beispielsweise besagten Wert 1, überschreiten.

Für die eigentliche Berechung der Schichtdickenänderung wird dann wie folgt vorgegangen.

Nach der Segmentierung des Farbraumes werden nun die CIELAB-Referenzfarbwerte den Segmenten zugewiesen. Gleichzeitig wird die Anzahl der Referenzwerte pro Segment (Histogramm) bestimmt. Segmente mit höheren Zahlen von Werten werden später stärker gewichtet als Segmente mit kleineren Zahlen. Segmente, in denen keine Farbwerte auftreten (H(n_{L},n_{C},n_{H}) = 0), werden später ignoriert. 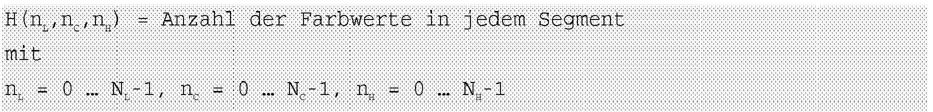 Es wird eine mittlere Abweichung der Farbmesswerte pro Segment berechnet. Dazu werden die Farbwertdifferenzen dL, da, db aller zu einem Segment gehörenden Farbwerte gewichtet aufsummiert. Die gemittelten Abweichungen werden zum Mittelwert des Segmentes hinzuaddiert und ergeben einen gemittelten Messwert für das Segment bezogen auf den Mittelpunkt. Dieser mittlere Messwert wird in den CIEXYZ-Farbraum transformiert.

Die Schichtdicke S einer Druckfarbe ist in üblichen Schichtdickenbereichen proportional zur Dichte der Farbe:

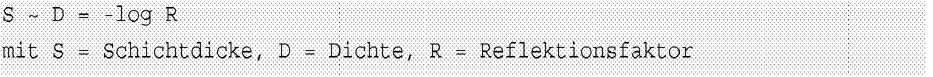

Der Reflektionsfaktor ist proportional zu den XYZ-Farbmesswerten:

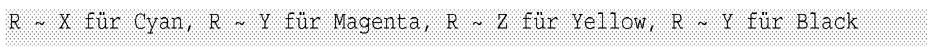

Daraus folgt, dass die Schichtdicken der Prozessfarben proportional zu den XYZ-Farbwerten sind:

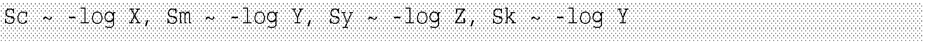

Für die Regelung wird die relativen Schichtdickenänderungen pro Segment bezogen auf die aktuell eingestellte Schichtdicke benötigt: 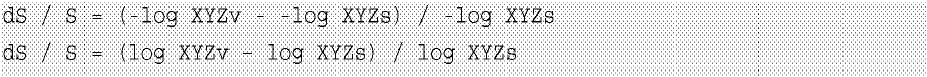 mit XYZv dem X- oder Y- oder Z-Farbwert der aktuellen mittleren Abweichung der Prozessfarben und XYZs dem X- oder Y- oder Z-Farbwert des mittleren Segmentwertes der Prozessfarben.

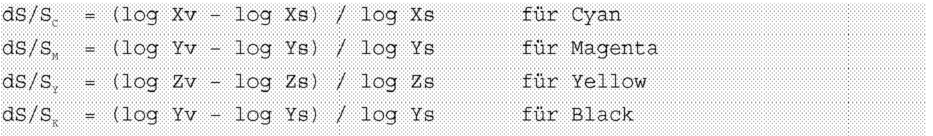

Aus den lokalen Schichtdickenänderungen für jedes Segment wird durch geeignete Zusammenfassung von Werten (Gewichtung) eine globale Schichtdickenänderung für eine Farbzone für die Prozessfarben berechnet. In dieser Ausführungsform des erfindungsgemäßen Verfahrens werden die Bunttonsegmente nahe den Prozessfarben gewichtet mit den Faktoren der Segmente aufsummiert. 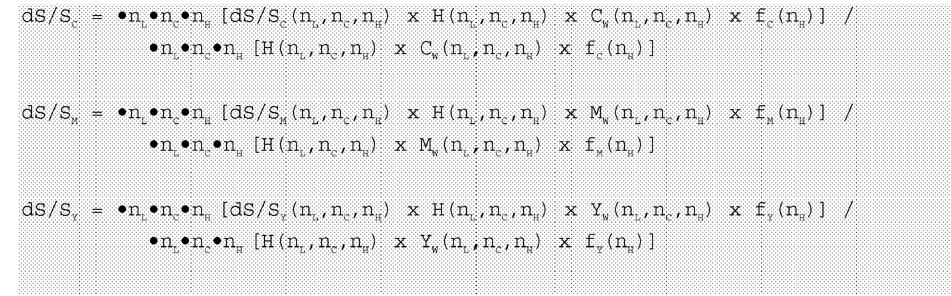 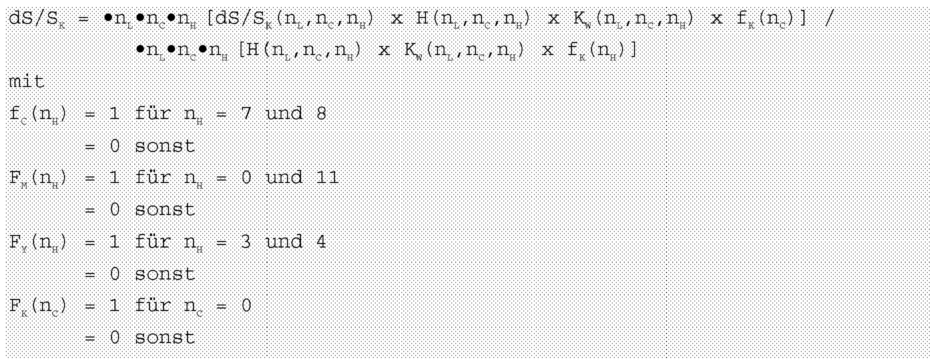 Nachfolgend sind einzelne Programmfragmente in der Programmiersprache C der bevorzugten Ausführungsform zusammengestellt und sollen einzelne Aspekte der erfindungsgemäßen Berechnung vertiefen.

Für die Segmentierung des Farbraumes werden die folgenden Datenstrukturen und Funktionen definiert:

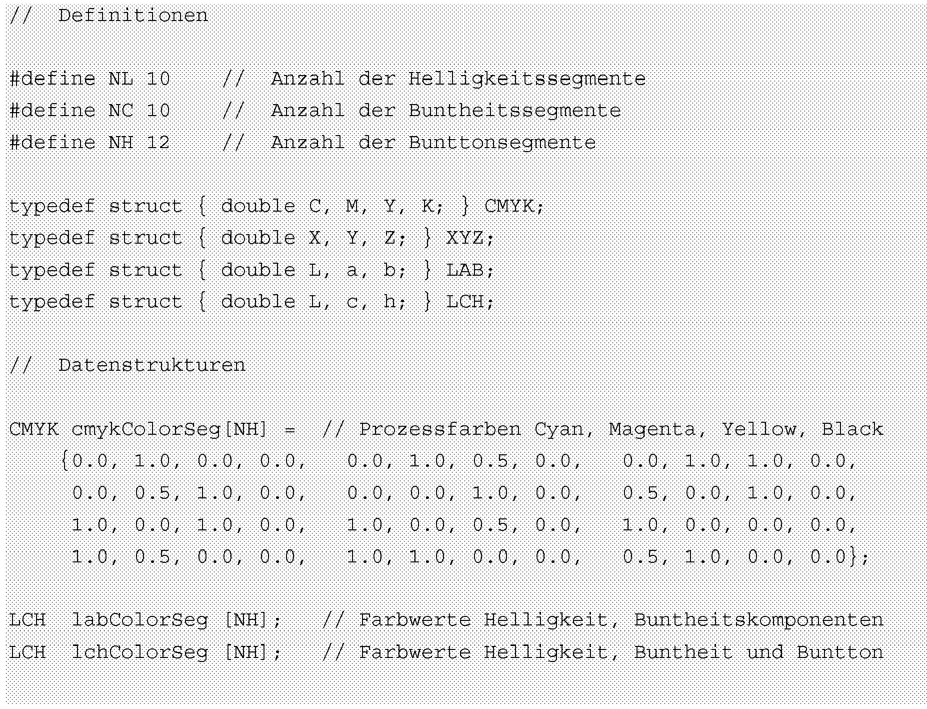

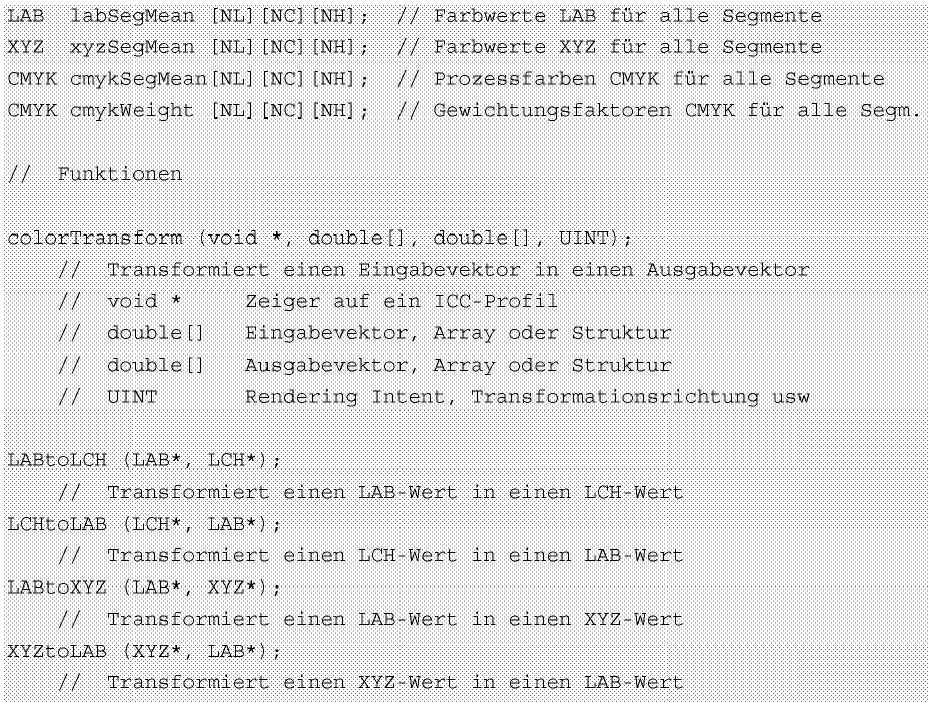

Die Berechnung der Bunttonsektoren erfolgt durch

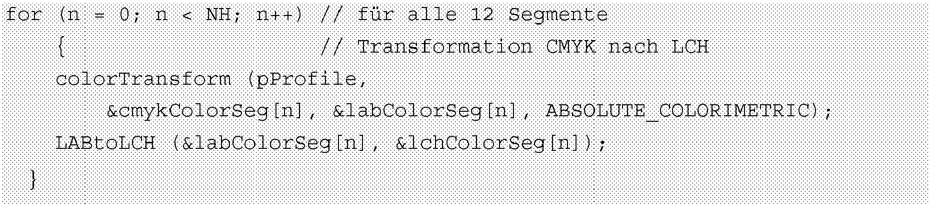

Ein mittlerer CIELAB-Farbwert für jedes Segment wird wie folgt berechnet:

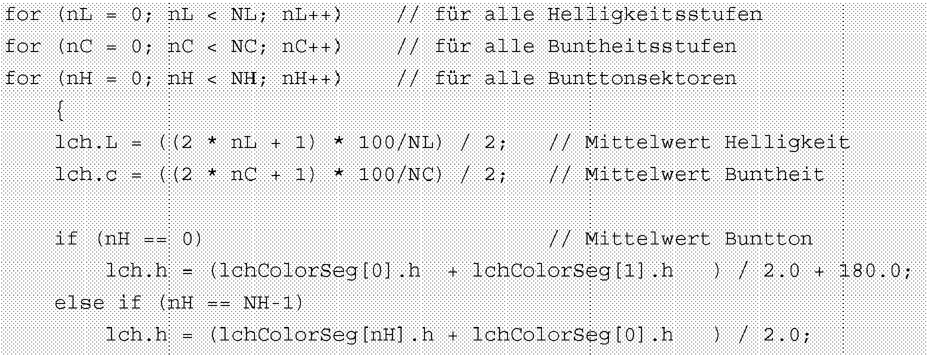

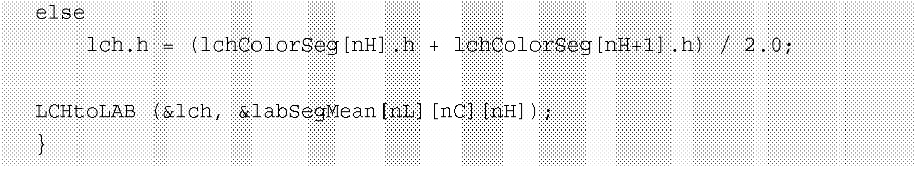

Ein mittlerer CIEXYZ-Farbwert für jedes Segment wird wie folgt berechnet:

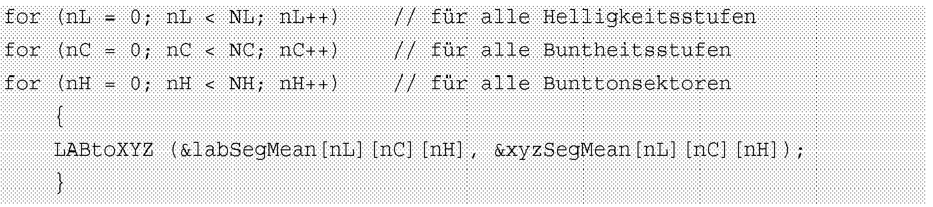

Ein mittlerer CMYK-Tonwertes für jedes Segment wird wie folgt berechnet:

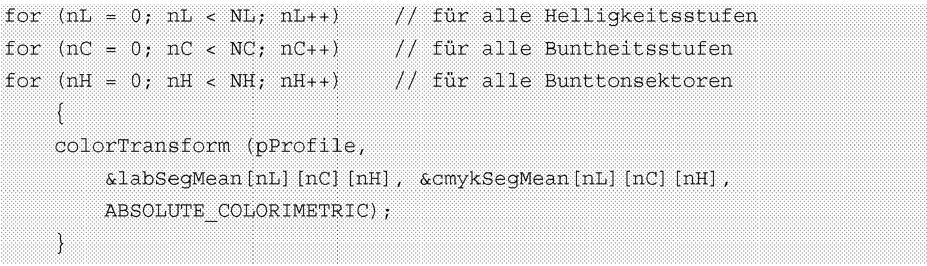

Die CMYK-Gewichtungsfaktoren sind erhältlich durch:

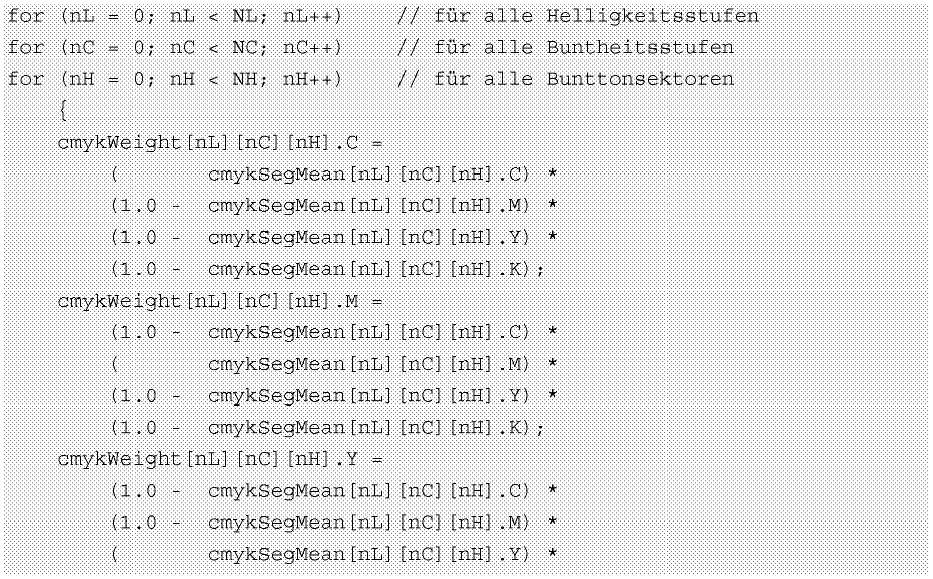

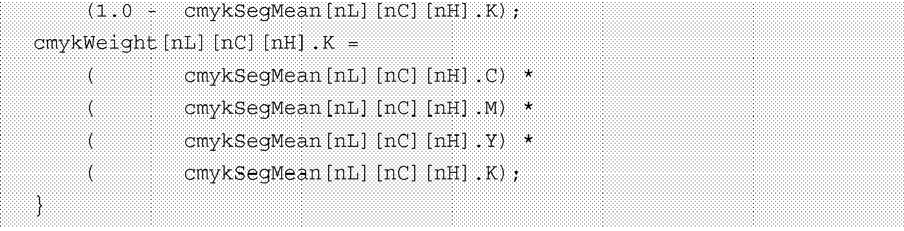

Für die Berechnung von Farbdifferenzen werden Referenzwerte (CMYK, LAB) und Farbmesswerte (LAB) zusammen mit den LAB-Differenzen und den Segmentzuordnungen in der folgenden Datenstruktur abgelegt:

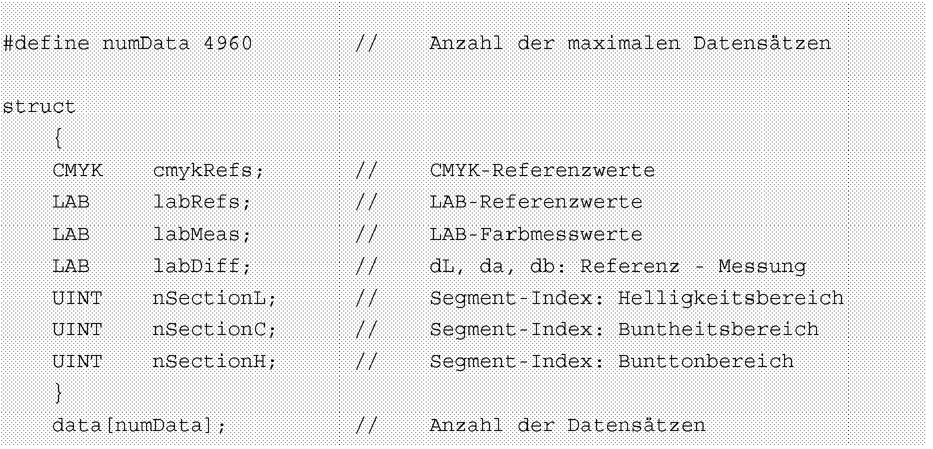

Die Prozessfarbwerte CMYK werden durch Einlesen der digitalen CMYK-Referenztonwerte für eine Farbzone wie folgt der Datenstruktur zugewiesen:

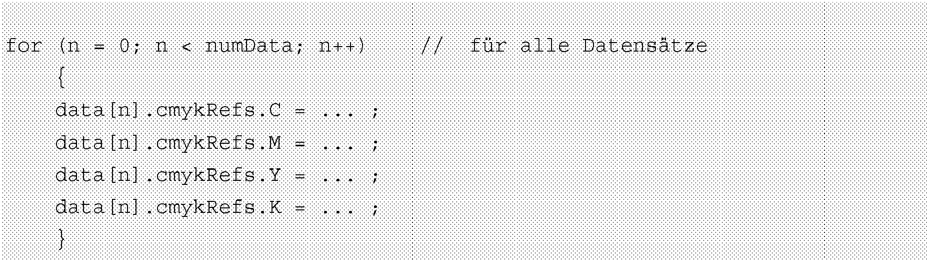

Es erfolgt eine Transformation der CMYK-Referenztonwerte in CIELAB-Farbwerte:

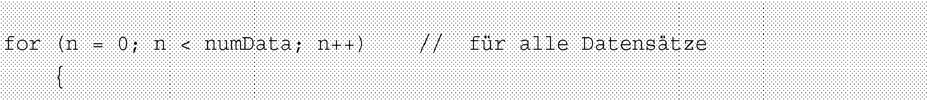

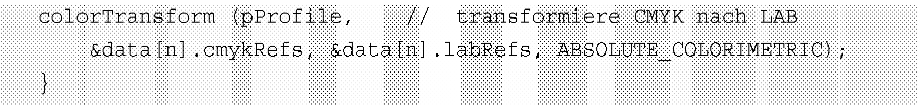

Die Farbmesswerte LAB werden durch Einlesen der CIELAB-Farbmesswerte für eine Farbzone wie folgt der Datenstruktur zugewiesen:

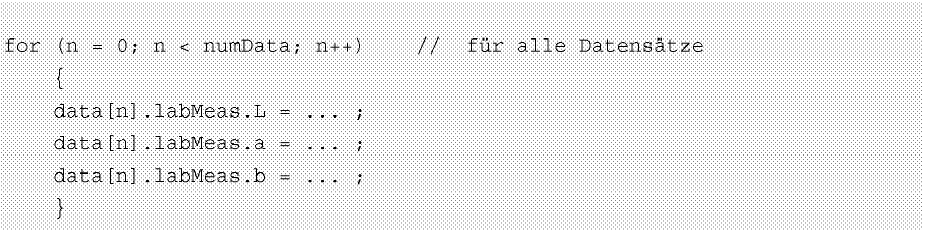

Die Weißpunkte für Referenz und Messung werden bestimmt:

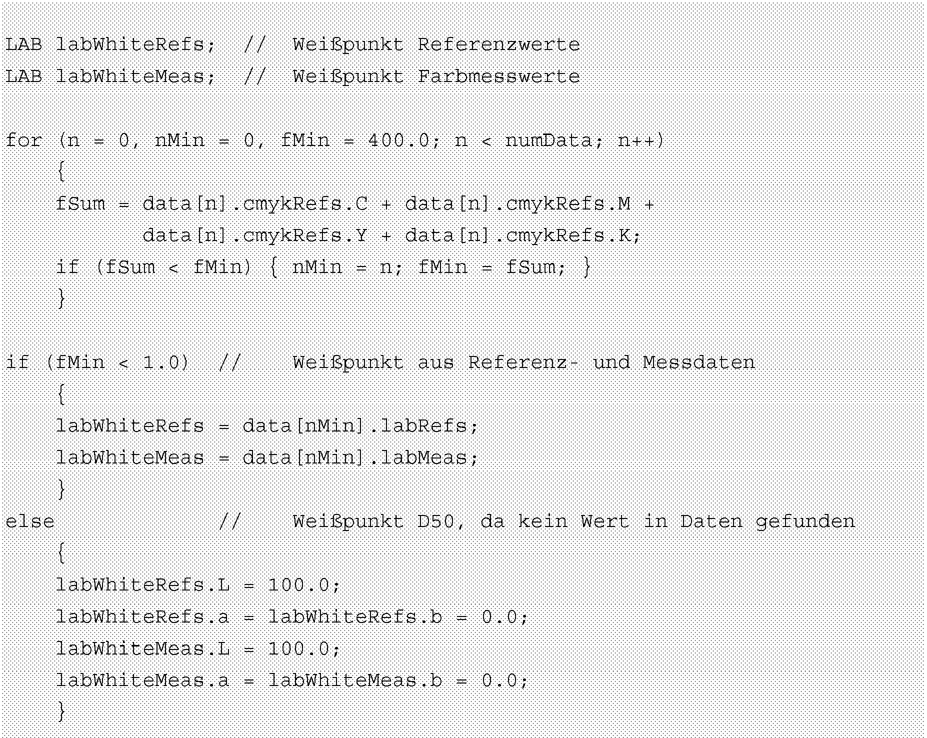

Weißpunktkorrekturfaktoren werden bestimmt und Referenzwerte werden angepasst:

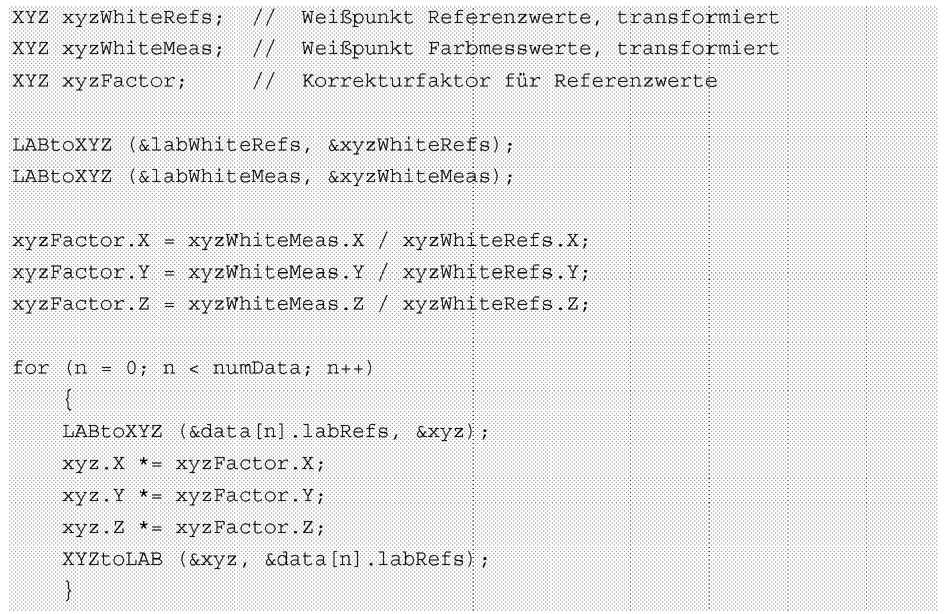

CIELAB-Farbdifferenzen werden berechnet:

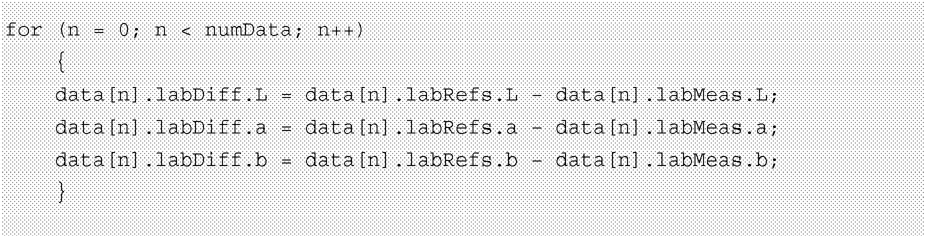

Als Datenstruktur für die Auswertung zur Berechnung der Schichtdickenänderung wird definiert:

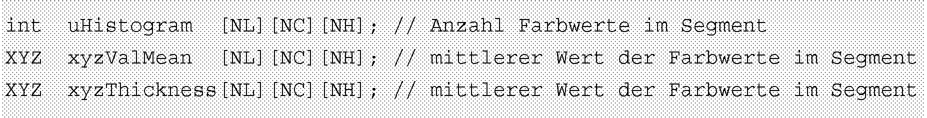

Zur Berechnung des Segmentindex und des Histogramms erfolgt:

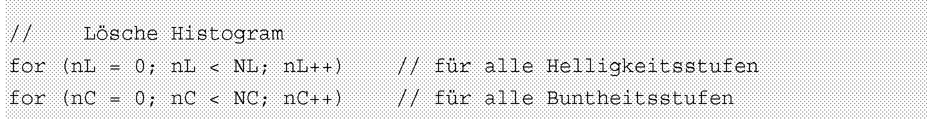

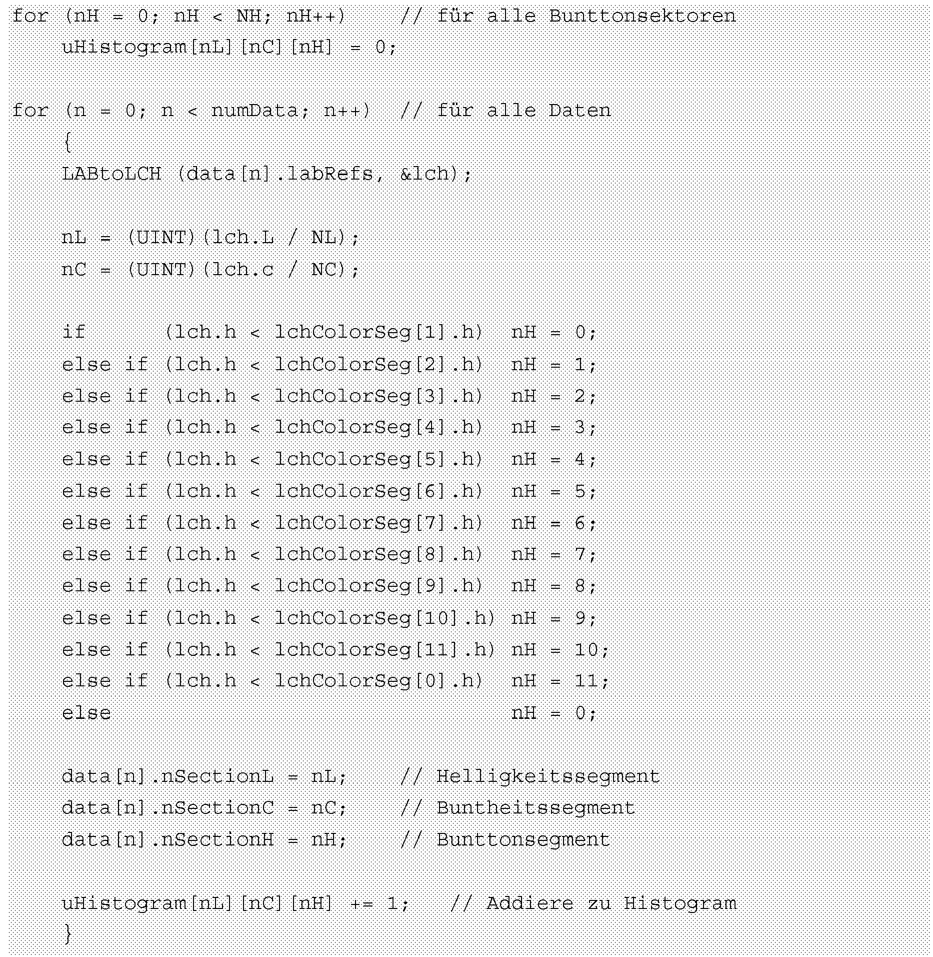

Die mittlere Abweichung wird berechnet:

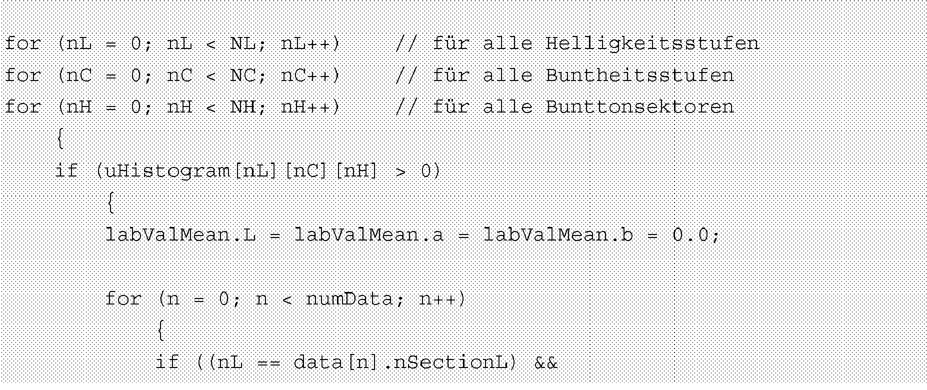

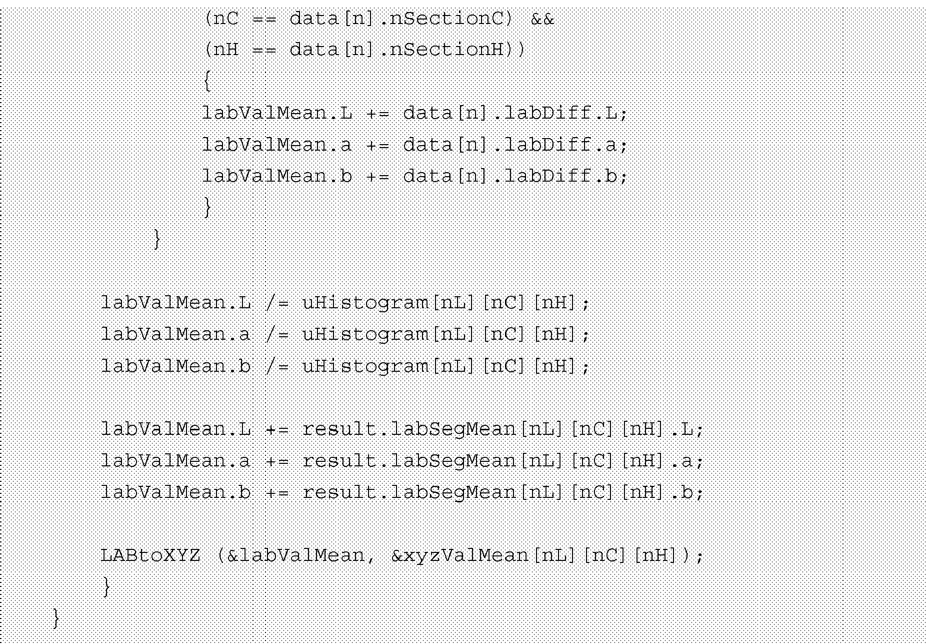

Die relative Schichtdickenänderung für jedes Segment wird berechnet:

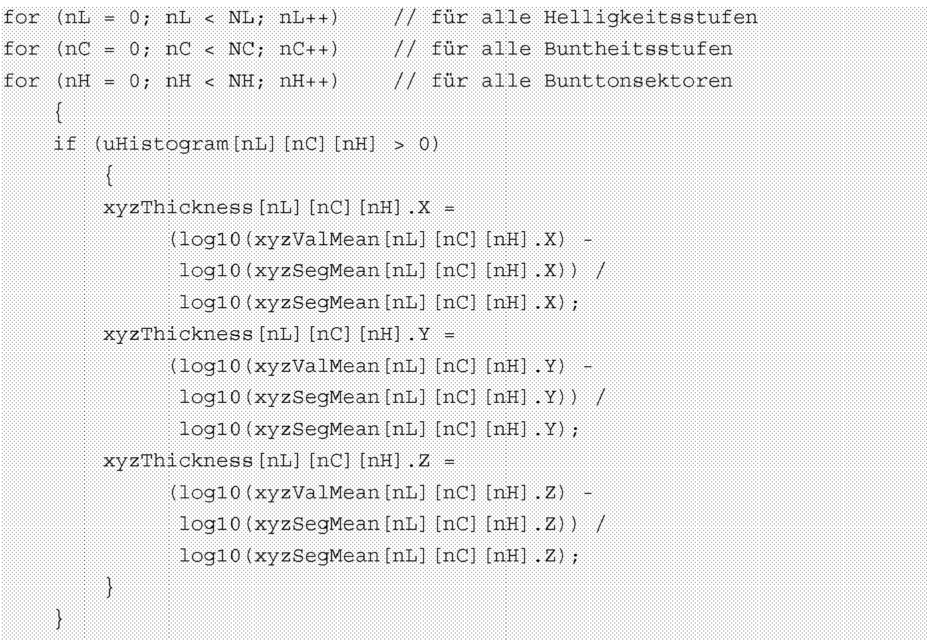

Die gewichtete Berechnung der Schichtdickenänderung für die Prozessfarben erfolgt schließlich wie folgt:

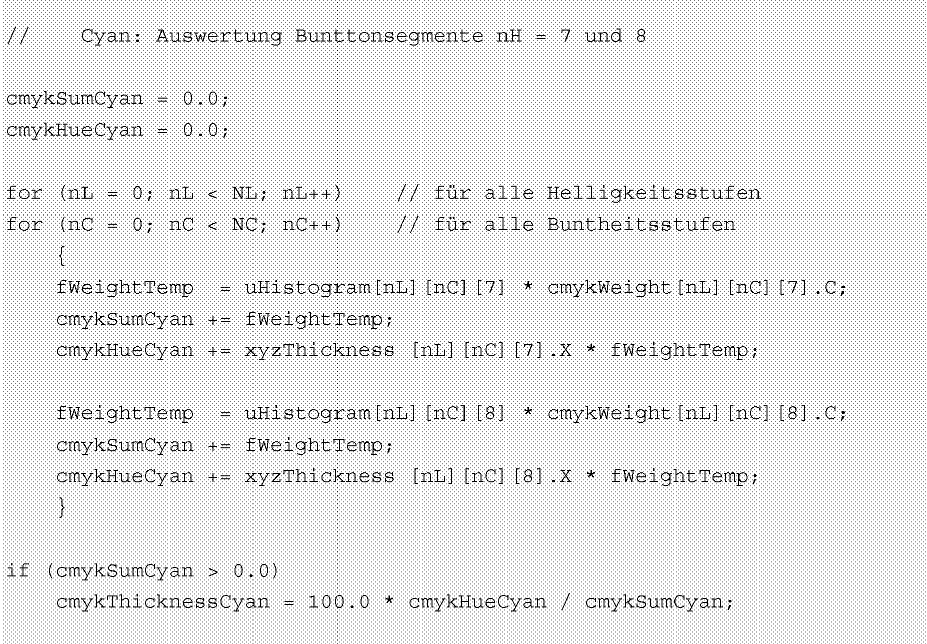

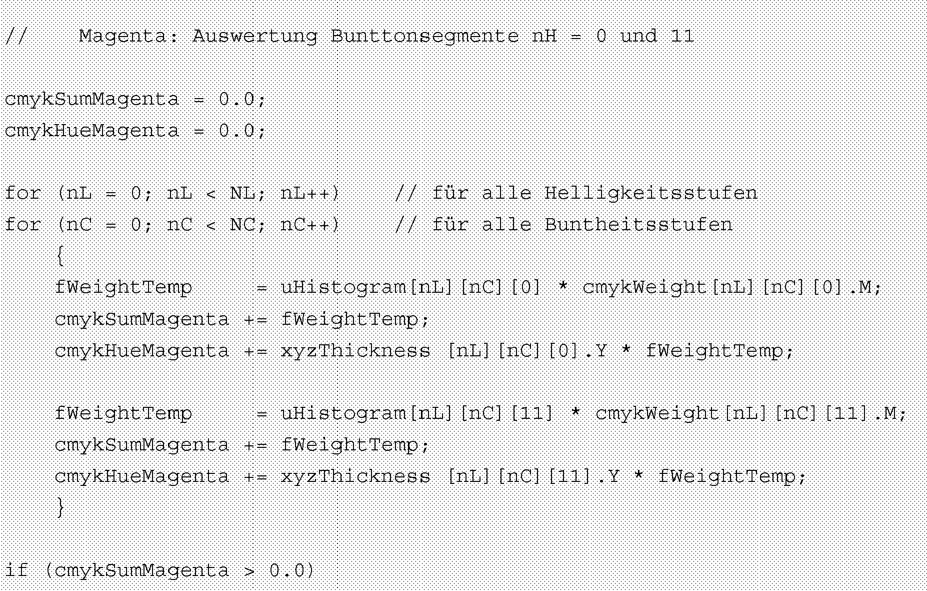

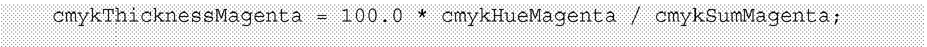

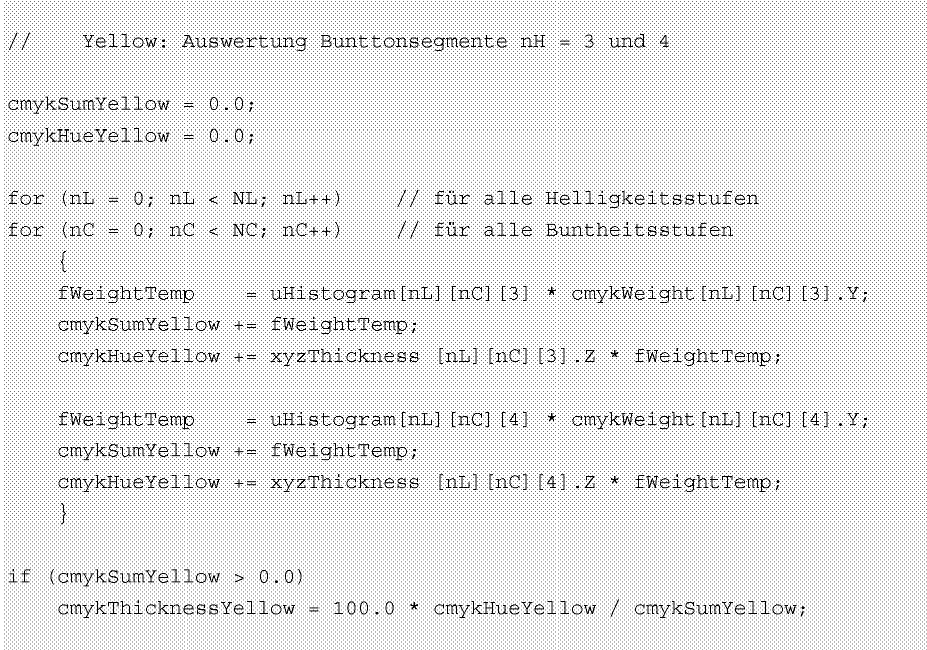

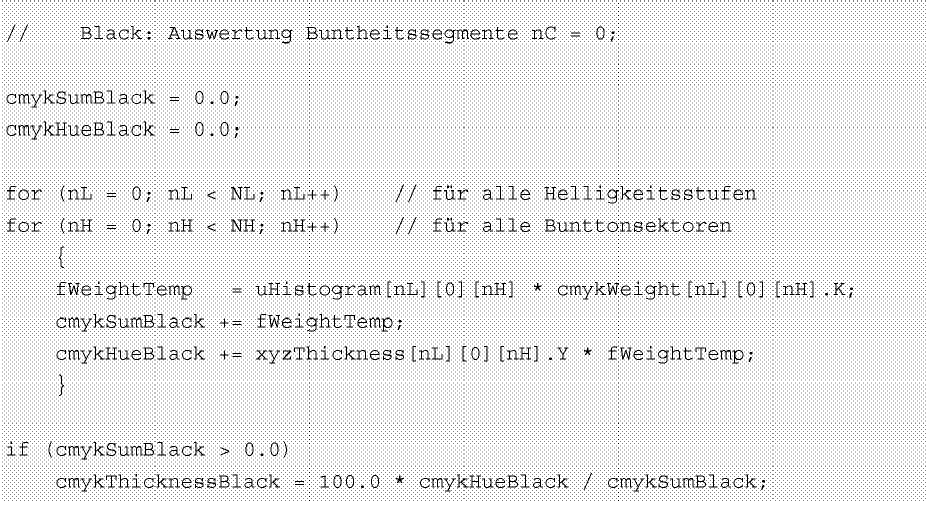

## Patentansprüche

1. Verfahren zur Berechnung von Korrekturwerten in einer Farbsteuerung oder Farbregelung für eine Druckmaschine, in welchem Referenzfarbwerte, wenigstens eine Farbraumtransformationsvorschrift und Messwerte zur Bestimmung der Istfarbwerte eines bedruckten Substrates verwendet werden und in welchem ein Vergleich des Istzustands mit dem Sollzustand in einem segmentierten Farbraum durchgeführt wird,
**dadurch gekennzeichnet,**
**dass** der segmentierte Farbraum ein geräteunabhängiger Farbraum ist.

2. Verfahren zur Berechnung von Korrekturwerten gemäß Anspruch 1,
**dadurch gekennzeichnet,**
**dass** der segmentierte Farbraum der CIELAB-Farbraum ist.

3. Verfahren zur Berechnung von Korrekturwerten gemäß einem der vorstehenden Ansprüche,
**dadurch gekennzeichnet,**
**dass** pro Segment des segmentierten Farbraums ein mittlerer CIELAB-Farbwert und/oder ein mittlerer CIEXYZ-Farbwert und/oder ein mittlerer CMYK-Tonwert berechnet wird.

4. Verfahren zur Berechnung von Korrekturwerten gemäß einem der vorstehenden Ansprüche,
**dadurch gekennzeichnet,**
**dass** für jedes Segment ein CMYK-Gewichtungsfaktor berechnet wird.

5. Verfahren zur Berechnung von Korrekturwerten gemäß einem der vorstehenden Ansprüche,
**dadurch gekennzeichnet,**
**dass** digitale CMYK-Referenztonwerte eingelesen und in CIELAB-Referenzfarbwerte konvertiert werden.

6. Verfahren zur Berechnung von Korrekturwerten gemäß einem der vorstehenden Ansprüche,
**dadurch gekennzeichnet,**
**dass** Messwerte der CIELAB-Farbwerte des bedruckten Substrats eingelesen werden.

7. Verfahren zur Berechnung von Korrekturwerten gemäß einem der vorstehenden Ansprüche,
**dadurch gekennzeichnet,**
**dass** der Weißpunkt der Referenzfarbwerte korrigiert wird.

8. Verfahren zur Berechnung von Korrekturwerten gemäß einem der vorstehenden Ansprüche,
**dadurch gekennzeichnet,**
**dass** für alle Werte CIELAB-Farbwertdifferenzen dL, da und db berechnet werden.

9. Verfahren zur Berechnung von Korrekturwerten gemäß einem der vorstehenden Ansprüche,
**dadurch gekennzeichnet,**
**dass** pro Segment die Anzahl von Farbwerten berechnet wird.

10. Verfahren zur Berechnung von Korrekturwerten gemäß einem der vorstehenden Ansprüche,
**dadurch gekennzeichnet,**
**dass** pro Segment eine mittlere Abweichung der gemessenen Farbwerte von den Referenzfarbwerten berechnet wird.

11. Verfahren zur Berechnung von Korrekturwerten gemäß einem der vorstehenden Ansprüche,
**dadurch gekennzeichnet,**
**dass** pro Segment eine notwendige Schichtdickenänderung berechnet und eine gewichtete Berechnung der durchzuführenden Schichtdickenänderung aus den pro Segment notwendigen Schichtdickenänderungen erfolgt.

12. Verfahren zur Berechnung von Korrekturwerten gemäß einem der vorstehenden Ansprüche,
**dadurch gekennzeichnet,**
**dass** der CIELAB-Farbraum in Polarkoordinaten (CIELCH Darstellung) segmentiert wird, wobei die Helligkeitsachse L in N_L Helligkeitsbereiche und die ab-Ebenen jeweils in N_H Bunttonsektoren und N_C Buntheitsbereiche zerlegt wird.

13. Verfahren zur Berechnung von Korrekturwerten gemäß Anspruch 12,
**dadurch gekennzeichnet,**
**dass** die Segmentierung mit Bunttonwinkel der Prozessfarben mittig im Bunttonsektor erfolgt.

14. Verfahren zur Berechnung von Korrekturwerten gemäß Anspruch 12 oder 13,
**dadurch gekennzeichnet,**
**dass** die Segmentierung der Helligkeitsachse nur im Bereich zwischen hellstem und dunkelstem Farbwert erfolgt.

15. Verfahren zur Berechnung von Korrekturwerten gemäß Anspruch 12, 13 oder 14,
**dadurch gekennzeichnet,**
**dass** die Segmentierung der Buntheit in Abhängigkeit von der maximalen Buntheit im Sektor erfolgt.

16. Verfahren zur Berechnung von Korrekturwerten gemäß Anspruch 12, 13, 14 oder 15,
**dadurch gekennzeichnet,**
**dass** N_L=10, N_C=10 und N_H=12 ist.

17. Verfahren zur Berechnung von Korrekturwerten gemäß einem der vorstehenden Ansprüche,
**dadurch gekennzeichnet,**
**dass** mittlere Werte pro Segment als geometrische Mittel oder als Segmentschwerpunkt berechnet werden.

18. Verfahren zur Berechnung von Korrekturwerten gemäß einem der vorstehenden Ansprüche 4 bis 17,
**dadurch gekennzeichnet,**
**dass** die CMYK-Gewichutngsfaktoren C_W, M_W, Y_W und K_W aus den Tonwerten C, M, Y und K nach der Vorschrift
C_W= C*(1-M)*(1-Y)*(1-K), M_W=(1-C)*M*(1-Y)*(1-K),
Y_W=(1-C)*(1-M)*Y*(1-K) und K_W=C*M*Y*K,
wenn K, C und M jeweils kleiner als 100% ist,
oder nach der Vorschrift
C_W= C*(1-M)*(1-Y), M_W=(1-C)*M*(1-Y),
Y_W=(1-C)*(1-M)*Y und K_W=C*M*Y*K
wenn K=100% oder M=C=100% ist, berechnet werden.

19. Verfahren zur Berechnung von Korrekturwerten gemäß einem der vorstehenden Ansprüche 4 bis 17,
**dadurch gekennzeichnet,**
**dass** die CMYK-Gewichutngsfaktoren C_W, M_W, Y_W und K_W in quadratischer Gewichtung bestimmt werden.

20. Verfahren zur Berechnung von Korrekturwerten gemäß einem der vorstehenden Ansprüche,
**dadurch gekennzeichnet,**
**dass** absolute Farbwerte im Verfahren verarbeitet werden.

21. Verfahren zur Berechnung von Korrekturwerten gemäß einem der vorstehenden Ansprüche,
**dadurch gekennzeichnet,**
**dass** relative Farbwerte bezogen auf das Weiß des Substrates, insbesondere das Papierweiß oder Kartonweiß, im Verfahren verarbeitet werden.

22. Verfahren zur Berechnung von Korrekturwerten gemäß einem der vorstehenden Ansprüche 7 bis 21,
**dadurch gekennzeichnet,**
**dass** die Weißpunktkorrektur durch eine lineare Skalierung gemäß der einfachen von-Kries-Transformation erfolgt.

23. Verfahren zur Berechnung von Korrekturwerten gemäß einem der vorstehenden Ansprüche 7 bis 21,
**dadurch gekennzeichnet,**
**dass** die Weißpunktkorrektur durch eine komplexe Farbumstimmung gemäß der Bradford-Transformation erfolgt.

24. Verfahren zur Berechnung von Korrekturwerten gemäß einem der vorstehenden Ansprüche 11 bis 23,
**dadurch gekennzeichnet,**
**dass** zur Berechnung der Schichtdickenänderung die Auswahl der Segmente durch Gewichtung der Bunttonsegmente nahe den Prozessfarben erfolgt.

25. Verfahren zur Berechnung von Korrekturwerten gemäß einem der vorstehenden Ansprüche 11 bis 23,
**dadurch gekennzeichnet,**
**dass** bei der Berechnung der Schichtdickenänderung eine Erweiterung der Segmente durch eine gewichtete Einbeziehung weiterer Bunttonsektoren erfolgt.

26. Verfahren zur Berechnung von Korrekturwerten gemäß einem der vorstehenden Ansprüche,
**dadurch gekennzeichnet,**
**dass** der Farbauftrag oder die Farbzufuhr von entweder genau drei Bunttonfarben und Schwarz oder mehr als drei Buntfarben und Schwarz oder eine Anzahl von Bunttonfarben ohne Schwarz gesteuert oder geregelt wird.

27. Verfahren zur Berechnung von Korrekturwerten gemäß einem der vorstehenden Ansprüche,
**dadurch gekennzeichnet,**
**dass** die Farbwerke der Druckmaschine jeweils eine Anzahl von in lateraler Richtung angeordneten Farbzonen aufweisen, für welche das Verfahren jeweils angewendet wird.

28. Verfahren zur Berechnung von Korrekturwerten gemäß einem der vorstehenden Ansprüche,
**dadurch gekennzeichnet,**
**dass** die Druckmaschine eine Bogendruckmaschine ist.

29. Verfahren zur Berechnung von Korrekturwerten gemäß einem der vorstehenden Ansprüche,
**dadurch gekennzeichnet,**
**dass** die Druckmaschine eine Mehrfarbenoffsetdruckmaschine ist.
